# EUROPÄISCHE PATENTSCHRIFT

(11) **EP 1 452 860 B1**
(45) Veröffentlichungstag und Bekanntmachung des Hinweises auf die Patenterteilung: **14.04.2010**
(21) Anmeldenummer: 03019972.3
(22) Anmeldetag: 03.09.2003
(51) Int. Cl.: G01N 27/407

(54) **Verfahren zur Bestimmung von Ammoniak**
Method for measuring ammonia
Procédé pour la détermination de l'ammoniac

(30) Priorität: 27.02.2003 DE 10308394; 27.02.2003 DE 10308395
(43) Veröffentlichungstag der Anmeldung: 01.09.2004
(73) Patentinhaber: ROBERT BOSCH GMBH, 70442 Stuttgart (DE)
(72) Erfinder: Schichlein, Helge, 76137 Karlsruhe (DE); Thiemann-Handler, Sabine, 70435 Stuttgart (DE); Ochs, Thorsten, 71701 Schwieberdingen (DE); Schumann, Bernd, 71277 Rutesheim (DE)

(56) Entgegenhaltungen:
- EP-A- 1 001 262
- WO-A-00/57169
- DE-A- 10 121 771
- DE-C- 19 851 949
- US-A- 4 985 126
- PATENT ABSTRACTS OF JAPAN vol. 2000, no. 10, 17. November 2000 (2000-11-17) & JP 2000 193639 A (NGK SPARK PLUG CO LTD), 14. Juli 2000 (2000-07-14)
- E. HÄFELE, K.KALTEMAIER AND U. SCHÖNAUER: "Measurement of ammonia with the Solidox-NH3 System" SENSORS AND ACTUATORS B, Bd. 4, 1991, Seiten 529-531, XP009023469

## Beschreibung

Die Erfindung betrifft ein Verfahren zur Bestimmung der Konzentration von Ammoniak und gegebenenfalls eines weiteren Bestandteils eines Gasgemischs nach dem Oberbegriff der unabhängigen Ansprüche.

### Stand der Technik

Im Zuge sich verschärfender Umweltrichtlinien kommt der Sensorik im Bereich der Abgase von Verbrennungsmotoren eine wachsende Bedeutung zu. Dabei werden insbesondere Gassensoren auf Festelektrolytbasis eingesetzt, die hochselektiv die zu detektierenden gasförmigen Bestandteile im Abgas nachweisen. Bei Verbrennungsmotoren, die mit einer überstöchiometrischen Luftmenge betrieben werden, kommt es zu einer verstärkten Bildung von Stickoxiden. Um diese aus dem Abgas entfernen zu können, sind Abgasreinigungssysteme von Bedeutung, die auf der Zugabe von reduzierend wirkenden Substanzen in den Abgastrakt beruhen. Dabei werden beispielsweise Ammoniak oder ammoniakfreisetzende Substanzen wie Harnstoff verwendet. Da neben der Emission von Stickoxiden auch die Freisetzung von Ammoniak in die Umwelt vermieden werden soll, wächst der Bedarf an Gassensoren, die sowohl für die Bestimmung von Ammoniak als auch für die Bestimmung reduzierbarer Gase wie Stickoxide geeignet sind.

Aus der DE 199 30 636 A1 ist ein Gassensor auf Festelektrolytbasis bekannt, der dem Nachweis von Stickoxiden dient. Das Messprinzip des Sensors beruht darauf, dass innerhalb des Gassensors überschüssiger Sauerstoff ohne Beeinträchtigung der Stickoxidkonzentration entfernt wird, wobei ein konstant niedriger Sauerstoffgehalt an einer ersten Pumpelektrode eingestellt wird. Dann wird parallel zum einen der Gehalt an verbliehenem Sauerstoff und zum anderen die Summe der Gehalte an verbliebenem Sauerstoff und an Stickoxiden amperometrisch ermittelt. Durch Differenzbildung der beiden Signale ist die Stickoxidkonzentration einfach zu berechnen. Dieser Sensor ist jedoch auf die Bestimmung von Sauerstoff und Stickoxiden beschränkt. Weitere Gassensoren sind aus der DE-C-19 851 945 und aus der WO-A-0 057 169 bekannt.

Demgegenüber liegt der vorliegenden Erfindung die Aufgabe zugrunde, ein ein Verfahren bereitzustellen, das die Bestimmung von Ammoniak und gegebenenfalls eines weiteren Bestandteils in einem Gasgemisch zuverlässig gewährleistet und dennoch kostengünstig hergestellt werden kann.

### Vorteile der Erfindung

Das der Erfindung zugrunde liegende Verfahren mit den kennzeichnenden Merkmalen der unabhängigen Ansprüche hat den Vorteil, dass es die Bestimmung des Ammoniakgehaltes eines Gasgemischs zuverlässig gestattet. Dazu wird in vorteilhafter Weise an eine Hilfselektrode des Sensorelements ein Potenzial angelegt, bei dem der im Gasgemisch vorhandene Ammoniak oxidiert wird. Dabei entstehen als Oxidationsprodukte Stickstoffmonoxid und in untergeordnetem Umfang Stickstoffdioxid, Distickstoffmonoxid und gegebenenfalls weitere Stickoxide.

Wird an eine Hilfselektrode ein Potenzial angelegt, bei dem Ammoniak oxidiert wird, so entstehen dabei Stickoxide, insbesondere Stickstoffmonoxid, deren Bestimmung messtechnisch relativ einfach ausgeführt werden kann. Es wird an eine in Strömungsrichtung des Gasgemisches im Inneren des Sensorelements nachgeordnete Messelektrode ein Potenzial angelegt, bei dem die bei der Oxidation von Ammoniak entstehenden Stickoxide reduziert werden. Der dabei zwischen einer Gegenelektrode und der Messelektrode fließende Pumpstrom kann auf einfache Weise detektiert und zur Bestimmung der ursprünglich im Gasgemisch vorhandenem Ammoniakkonzentration herangezogen werden.

Durch die in den Unteransprüchen aufgeführten Maßnahmen sind vorteilhafte Weiterbildungen und Verbesserungen des in den unabhängigen Ansprüchen angegebenen Sensorelements bzw. Verfahrens möglich. So ist es beispielsweise von Vorteil, wenn das Sensorelement zwei Messelektroden in seinem Inneren aufweist, wobei beiden Messelektroden jeweils eine Hilfselektrode vorangestellt ist, an der das im Gasgemisch enthaltene Ammoniak oxidiert wird. Zumindest einer der beiden Hilfselektroden ist eine weitere Hilfselektrode vorangestellt, an der im Gasgemisch bereits von vornherein enthaltene Stickoxide zersetzt werden. Ein derartiges Sensorelement ermöglicht es in vorteilhafter Weise, mittels der ersten Messelektrode die Summe aus der Stickoxidmenge, die aus der Oxydation von Ammoniak resultiert, und der Stickoxidmenge, die bereits von vornherein im Gasgemisch vorhanden war, zu bestimmen, und mittels der zweiten Messelektrode den Gehalt an Stickoxiden zu bestimmen, der ausschließlich bei der Oxidation des im Gasgemisch enthaltenen Ammoniak entsteht. Die Berechnung der Differenz beider Messsignale ermöglicht es, den Gehalt an Ammoniak und den Gehalt der bereits von vornherein im Gasgemisch enthaltenen Stickoxide voneinander unabhängig exakt zu bestimmen.

In einer besonders vorteilhaften Ausführungsform ist im Sensorelement lediglich eine Messelektrode und zwei der Messelektrode vorangestellte Hilfselektroden vorgesehen. In einem ersten Zeitraum werden an der ersten Hilfselektrode im Gasgemisch vorhandene Stickoxide und darin enthaltener Sauerstoff entfernt und an der zweiten Hilfselektrode im Gasgemisch vorhandenes Ammoniak oxidiert. Die dabei entstchenden Stickoxide werden an der Messelektrode reduziert. Die dabei messbare Stickoxidkonzentration entspricht der Konzentration an im Gasgemisch vorhandenem Ammoniak.

In einem zweiten Zeitraum wird an mindestens einer Hilfselektrode lediglich Sauerstoff reduziert und Ammoniak oxidiert, sodass im Gasgemisch enthaltene Oxidationsprodukte des Ammoniak in Form von Stickoxiden zur Messelektrode vordringen können. Auf diese Weise wird im zweiten Zeitraum an der Messelektrode die Summe der bereits im Gasgemisch vorhandenen und der bei der Oxidation von Ammoniak entstehenden Stickoxide bestimmt. Aus der Berechnung der Differenz des Messsignals im zweiten Zeitraum abzüglich des Messsignals im ersten Zeitraum ist es möglich, den Gehalt an Ammoniak und den Gehalt an von vornherein im Gasgemisch enthaltenen Stickoxiden zu bestimmen. Dies ermöglicht ein besonders einfaches Sensorlayout bei gleichzeitig guter Messgenauigkeit.

### Zeichnung

Vier Ausführungsbeispiele der Erfindung sind in der Zeichnung dargestellt und in der nachfolgenden Beschreibung näher erläutert. Es zeigen Figur 1 einen Längsschnitt in vertikaler Richtung durch einen messgasseitigen Abschnitt eines erfindungsgemäßen Sensorelements gemäß einem ersten Ausführungsbeispiel, Figur 2 einen Längsschnitt in vertikaler Richtung durch den messgasseitigen Abschnitt eines erfindungsgemäßen Sensorelements gemäß einer ersten Variante des ersten Ausführungsbeispiels, Figur 3 einen Längsschnitt in horizontaler Richtung auf der Höhe der Festelektrolytschicht 11b durch den messgasseitigen Abschnitt eines Sensorelements gemäß einem zweiten Ausführungsbeispiel, Figur 4 einen Längsschnitt in vertikaler Richtung durch den messgasseitigen Abschnitt eines Sensorelements gemäß einem dritten Ausführungsbeispiel und Figur 5 einen Längsschnitt in vertikaler Richtung durch den messgasseitigen Abschnitt eines erfindungsgemäßen Sensorelements gemäß einem vierten Ausführungsbeispiel.

### Ausführungsbeispiele

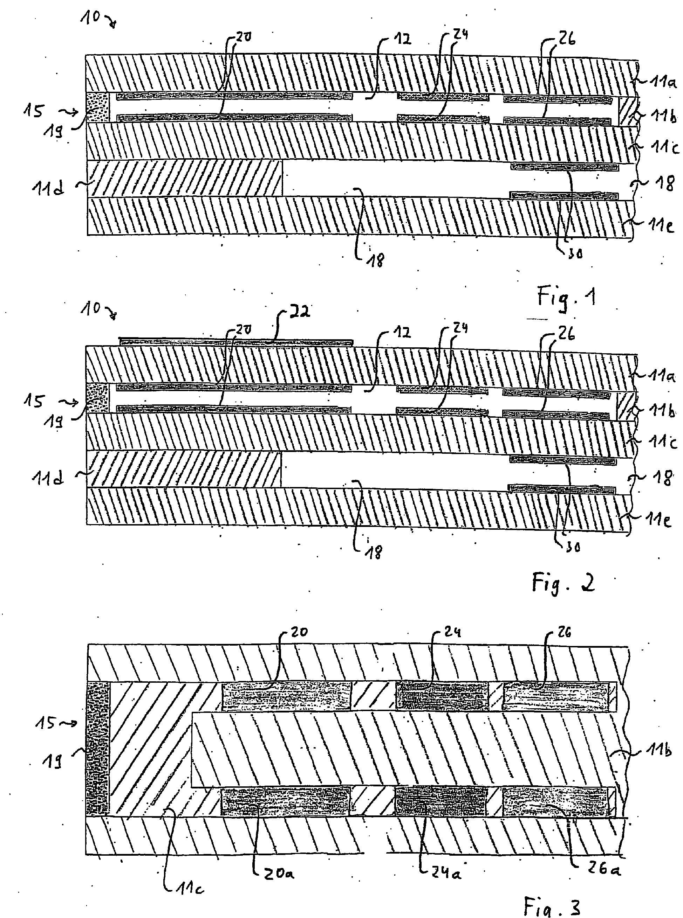

In Figur 1 ist ein prinzipieller Aufbau einer ersten Ausführungsform der vorliegenden Erfindung dargestellt. Mit 10 ist ein planares Sensorelement eines elektrochemischen Gassensors bezeichnet, das der Bestimmung von Ammoniak und gegebenenfalls eines weiteren Bestandteils eines Gasgemischs dient, vorzugsweise in Abgasen von Verbrennungsmotoren. Das Sensorelement weist eine Mehrzahl von sauerstoffionenleitenden Festelektrolytschichten 11a, 11b, 11c, 11d und 11e auf, die beispielsweise als keramische Folien ausgeführt sind und einen planaren keramischen Körper bilden. Sie bestehen aus einem sauerstoffionenleitenden Festelektrolytmaterial, wie beispielsweise mit Y₂O₃ stabilisiertem oder teilstabilisiertem ZrO₂.

Die integrierte Form des planaren keramischen Körpers des Sensorelements 10 wird durch Zusammenlaminieren der mit Funktionsschichten bedruckten keramischen Folien und anschließendem Sintern der laminierten Struktur in an sich bekannter Weise hergestellt.

Das Sensorelement 10 beinhaltet beispielsweise einen inneren Gasraum 12 und einen Referenzgaskanal 18. Der Referenzgaskanal 18 steht durch einen Gaseinlaß, der an einem Ende aus dem planaren Körper des Sensorelements 10 herausführt, in Kontakt mit einer Referenzgasatmosphäre, die beispielsweise durch Umgebungsluft gebildet ist.

Der innere Gasraum 12 weist eine Öffnung 15 auf, die den Kontakt mit dem zu bestimmenden Gasgemisch ermöglicht. Die Öffnung 15 ist in der Festelektrolytschicht 11b vorgesehen, sie kann jedoch auch in der Festelektrolytschicht 11a senkrecht zur Oberfläche des Sensorelements 10 angebracht sein.

In den keramischen Grundkörper des Sensorelements 10 ist ferner zwischen zwei nicht dargestellten elektrischen Isolationsschichten ein Widerstandsheizer eingebettet. Der Widerstandsheizer dient dem Aufheizen des Sensorelements 10 auf die notwendige Betriebstemperatur von beispielsweise 600 bis 900°C.

Im inneren Gasraum 12 ist eine Hilfselektrode 20 vorzugsweise in doppelter Ausführung ausgebildet. In Diffusionsrichtung des Gasgemischs nachgeordnet ist eine Hilfselektrode 24 angeordnet, vorzugsweise ebenfalls in doppelter Ausführung. Im Referenzgaskanal 18 befindet sich eine Referenzelektrode 30.

Die Hilfselektroden 20, 24 bilden jeweils zusammen mit der Referenzelektrode 30 als Gegenelektrode elektrochemische Pumpzellen. Mittels der ersten Pumpzelle 20, 30 wird ein konstanter, im Vergleich zum Gasgemisch niedrigerer Sauerstoffpartialdruck im inneren Gasraum 12 eingestellt.

Innerhalb des inneren Gasraums 12 ist in Diffusionsrichtung des Gasgemischs den Hilfselektroden 20 eine poröse Diffusionsbarriere 19 vorgelagert. Die poröse Diffusionsbarriere 19 bildet einen Diffusionswiderstand bezüglich des zu den Hilfselektroden 20 diffundierenden Gasgemischs aus. Wird der Diffusionswiderstand der Diffusionsbarriere 19 ausreichend groß gewählt, so können die elektrochemischen Pumpzellen 20, 30; 24, 30 im sogenannten Grenzstrombereich betrieben werden, bei dem an den entsprechenden Elektrodenoberflächen jeweils ein vollständiger Umsatz der zu zersetzenden Gase stattfindet und der resultierende Pumpstrom demzufolge limitiert ist. Eine solche Betriebsweise ist jedoch nicht zwingend.

Im inneren Gasraum 12 kann zusätzlich eine weitere poröse Diffusionsbarriere zwischen den Hilfselektroden 20 und den Hilfselektroden 24 vorgesehen sein, um die Einstellung von unterschiedlichen Sauerstoffkonzentrationen in verschiedenen Bereichen des inneren Gasraums 12 zu stabilisieren.

Im inneren Gasraum 12 befindet sich weiterhin in Diffusionsrichtung des Gasgemischs den Hilfselektroden 20, 24 nachgeordnet eine Messelektrode 26, die vorzugsweise zusammen mit der Referenzelektrode 30 eine weitere Pumpzelle bildet und aus einem katalytisch aktiven Material wie beispielsweise aus Rhodium, einer Platin/Rhodium-Legierung oder einer sonstigen geeigneten Platinlegierung ausgeführt ist. Die Referenzelektrode 30 besteht ebenfalls aus einem katalytisch aktiven Material wie beispielsweise Platin. Das Elektrodenmaterial für alle Elektroden wird dabei in an sich bekannter Weise als Cermet eingesetzt, um mit den keramischen Folien zu versintem.

Gemäß einer ersten Ausführungsform der vorliegenden Erfindung, wird mittels der Pumpzelle 26, 30 in einem ersten Zeitraum die Konzentration des im Gasgemisch vorhandenen Ammoniaks bestimmt und in einem zweiten Zeitraum die Summe der Konzentrationen an im Gasgemisch vorhandenem Ammoniak und an im Gasgemisch von vorneherein vorhandenen Stickoxiden. So ergibt das im ersten Zeitraum gewonnene Messsignal ein direktes Maß für die im Gasgemisch vorliegende Ammoniakkonzentration. Weiterhin ergibt sich durch einfache Differenzbildung der im ersten und im zweiten Zeitraum gewonnenen Messsignale die im Gasgemisch vorhandene Stickstoffmonoxidkonzentration, oder, bei geeignetem Potenzial an den Messelektroden 26, die im Gasgemisch enthaltene Stickoxidgesamtkonzentration.

Dazu wird im ersten Zeitraum an die Hilfselektroden 20 ein Potenzial angelegt, bei dem der im Gasgemisch vorhandene Sauerstoff und die im Gasgemisch vorhandenen Stickoxide reduziert und somit zumindest weitgehend aus dem Gasgemisch entfernt werden. Das an die Hilfselektroden 20 angelegte Potenzial wird jedoch so gewählt, dass im Gasgemisch vorhandenes Ammoniak nicht zersetzt wird. Das gewählte Potenzial beträgt beispielsweise -400 bis -900 mV gegenüber dem Potenzial der Luftreferenzelektrode 30. Durch die Wahl eines geeigneten Elektrodenmaterials für die Hilfselektroden 20 kann die Selektivität dieser Elektroden noch gesteigert werden. Dazu bestehen die Hilfselektroden 20 beispielsweise aus basischen Oxiden wie K₂O, Li₂O oder Oxiden der Seltenen Erden. Auch Edelmetallelektroden, die mit basischen Oxiden imprägniert sind, sind geeignet.

Im ersten Zeitraum wird weiterhin an die Hilfselektroden 24 ein Potenzial angelegt, das zur weiteren Verringerung der im Gasgemisch noch enthaltenen Sauerstoffkonzentration führt und zu einer quantitativen Oxidation des im Gasgemisch enthaltenen Ammoniaks zu Stickoxiden, insbesondere Stickstoffmonoxid. Weiterhin wird beispielsweise der im Gasgemisch enthaltene Wasserstoff oxidiert. Dazu wird an die Hilfselektroden 24 ein Potenzial von - 200 bis - 700 mV gegenüber der Luftreferenzelektrode 30 angelegt. Die zweiten Hilfselektroden 24 bestehen aus einem geeigneten Material, beispielsweise aus Platin oder einer Platinlegierung.

An die Messelektroden 26 wird im ersten Zeitraum ein Potenzial von - 200 bis -500 mV angelegt, bei dem die im Gasgemisch enthaltenen Stickoxide, insbesondere Stickstoffmonoxid, quantitativ reduziert werden und der dabei zu den Messelektroden 26 fließende Pumpstrom detektiert wird. Der Pumpstrom ist ein direktes Maß für die Konzentration an ursprünglich im Gasgemisch vorhandenem Ammoniak.

Im zweiten Zeitraum wird an die Hilfselektroden 20 ein Potenzial angelegt, bei dem selektiv die Sauerstoffkonzentration des Gasgemischs verringert wird, ohne dass im Gasgemisch vorhandene Stickoxide zersetzt werden. Gleichzeitig wird das im Gasgemisch vorhandene Ammoniak oxidiert. Als Potenzial wird beispielsweise - 200 bis - 400 mV gegenüber der Luftreferenzelektrode 30 gewählt.

An den Hilfselektroden 24 wird im zweiten Zeitraum wie im ersten Zeitraum im Gasgemisch noch vorhandenes Ammoniak zu entsprechenden Stickoxiden, insbesondere Stickstoffmonoxid oxidiert. Gleichzeitig wird die im Gasgemisch noch vorhandene Sauerstoffkonzentration weiter verringert und im Gasgemisch enthaltener Wasserstoff oxidiert. Auf diese Weise zeigt die Messelektrode 26 eine geringe Querempfindlichkeit gegenüber dem Wasserstoffgehalt des zu messenden Gasgemischs. An den Hilfselektroden 24 ist dabei ein Potenzial von - 200 bis - 400 mV vorgesehen.

Im zweiten Zeitraum werden an den Messelektroden 26 Stickoxide, insbesondere Stickstoffmonoxid reduziert, wobei die Stickoxide zum einen aus der Oxidation von Ammoniak resultieren, zum anderen gegebenenfalls von vornherein Bestandteile des Gasgemischs waren. Im zweiten Zeitraum wird somit mittels der Pumpzelle 26, 30 die Summe der Konzentrationen von aus der Oxidation von Ammoniak resultierenden Stickoxiden und bereits von vorneherein im Gasgemisch vorhandenen Stickoxiden bestimmt. Dazu wird, wie im ersten Zeitraum, an die Messelektroden 26 ein Potenzial von - 200 bis - 500 mV gegenüber der Luftreferenzelektrode 30 angelegt.

Eine alternative Betriebsweise des Sensorelements 10 besteht darin, auf einen Pendelbetrieb mit einem ersten und einem zweiten Zeitraum zu verzichten und anstatt dessen die für den ersten Zeitraum beschriebene Betriebsweise für die gesamte Betriebsdauer beizubehalten. Dies vereinfacht die messtechnische Steuerung des Sensorelements. Diese Betriebsweise gestattet jedoch nicht, neben der Ammoniakkonzentrationen auch die Konzentration an im Gasgemisch vorhandenen Stickoxiden zu erfassen.

In Figur 2 ist eine Variante des vorliegenden Sensorelements gemäß dem ersten Ausführungsbeispiel dargestellt. Dabei bezeichnen gleiche Bezugszeichen die gleichen Komponenten wie in Figur 1. Das in Figur 2 dargestellte Sensorelement weist auf einer Außenfläche eine äußere Pumpelektrode 22 auf, die als Gegenelektrode jeweils zusammen mit den Hilfselektroden 20, 24 elektrochemische Pumpzellen bildet. In diesem Fall wird zur Kontrolle des eingestellten Sauerstoffpartialdrucks mindestens eine der Hilfselektroden 20, 24 zusätzlich mit der Referenzelektrode 30 zu einer sogenannten Nernst- bzw. Konzentrationszelle zusammengeschaltet. Dies ermöglicht einen direkten Vergleich des von der Sauerstoffkonzentration im inneren Gasraum 12 abhängigen Sauerstoffpotenzials der Hilfselektroden 20, 24 mit dem konstanten Sauerstoffpotenzial der Referenzelektrode 30 in Form einer messbaren elektrischen Spannung. Die Höhe der an die erste Pumpzelle 20, 22 anzulegenden Pumpspannung wird so gewählt, sodass die an der Konzentrationszelle 24, 30 gemessene elektrische Spannung einen konstanten Wert annimmt.

Alternativ oder zusätzlich kann die Messelektrode 26 mit der äußeren Pumpelektrode 22 die weitere Pumpzelle 22, 26 bilden und die Messelektrode 26 mit der Referenzelektrode 30 eine weitere Konzentrationszelle 26, 30. Dies gestallet eine alternative oder zusätzliche Kontrollmöglichkeit des im inneren Gasraum 12 vorliegenden Sauerstoffpartialdrucks.

In Figur 3 ist ein zweites Ausführungsbeispiel des vorliegenden Sensorelements dargestellt. Dabei bezeichnen gleiche Bezugszeichen die gleichen Komponenten wie in Figur 1 oder 2. Figur 3 zeigt einen horizontalen Längsschnitt durch den messgasseitigen Abschnitt eines Sensorelements 10 auf der Höhe der Festelektrolytschicht 11b gemäß einem zweiten Ausführungsbeispiel. Dieses Sensorelement weist zwei Messgasräume 12, 12a auf, die im Bereich der Öffnung 15 miteinander in Kontakt stehen und über eine gemeinsame Diffusionsbarriere 19 gegenüber dem das Sensorelement umgebende Gasgemisch abgegrenzt sind Dabei weist der Messgasraum 12 eine Hilfselektrode 20, eine Hilfselektrode 24 und eine Messelektrode 26 auf; und der zweite Messgasraum 12a eine weitere Hilfselektrode 20a, eine weitere Hilfselektrode 21a und eine weitere Messelektrode 26a.

Im Betrieb des Sensorelements werden an die Elektroden 20, 24, 26 des Messgasraums 12 diejenigen Potenziale angelegt, wie sie beim Sensorelement gemäß dem ersten Ausführungsbeispiel während des ersten Zeitraums vorgesehen sind. Das bedeutet, dass an den ersten Hilfselelektroden 20 ein Potenzial von - 400 bis - 900 mV anliegt, bei dem im Gasgemisch enthaltene Stickoxide entfernt sowie der im Gasgemisch enthaltene Sauerstoffgehalt reduziert wird. An den Hilfselektroden 24 liegt ein Potenzial von - 200 bis - 700 mV an, bei dem der Sauerstoffgehalt des Gasgemischs weiter verringert und im Gasgemisch enthaltenes Ammoniak bzw. darin enthaltener Wasserstoff oxidiert wird. An den Messelektroden 26 wird bei einem Potenzial von - 200 bis - 500 mV das bei der Oxidation von Ammoniak entstandene Stickstoffmonoxid reduziert und der dabei zwischen der Messelektrode 26 und der Referenzelektrode 30 fließende Pumpstrom ermittelt und als Maß für die Ammoniakkonzentration des Gasgemischs herangezogen.

Vorzugweise zur gleichen Zeit wird an die Elektroden 20a, 24a, 26a des zweiten Messgasraums 12a ein Potenzial angelegt, wie es bereits im Rahmen des ersten Ausführungsbeispiels innerhalb des zweiten Zeitraums für die Elektroden 20, 24, 26 beschrieben ist.

So wird an die weiteren Hilfselektroden 20a ein Potential von -200 bis -400 mV angelegt, bei dem zwar der Sauerstoffgehalt des Gasgemischs verringert und im Gasgemisch vorliegendes Ammoniak oxidiert, der Gehalt an Stickoxiden jedoch nicht verändert wird. An den weiteren Hilfselektroden 24a wird bei einem Potenzial von - 200 bis - 400 mV noch verbliebenes Ammoniak zu Stickstoffmonoxid oxidiert. An den weiteren Messelektroden 26a liegt ein Potenzial von - 200 bis - 500 mV an, bei dem sowohl der Anteil an Stickstoffmonoxid, der bei der Oxidation von Ammoniak an den weiteren Hilfselektrode 20a, 24a entstanden ist, als auch der Anteil an Stickstoffmonoxid, der bereits von vornherein im Gasgemisch enthalten war, reduziert wird. Der dabei zwischen der Referenzelektrode 30 und den weiteren Messelektroden 26a fließende Pumpstrom ist ein Maß für die Summe der im Gasgemisch enthaltenen Ammoniakkonzentration zuzüglich der Konzentration an bereits im Gasgemisch von vorneherein vorhandenem Stickstoffmonoxid.

Das Sensorelement gemäß dem zweiten Ausführungsbeispiel ermöglicht es, synchron sowohl die Konzentration an Ammoniak im Gasgemisch als auch die Summe aus Ammoniak- und Stickstoffmonoxidkonzentrationen zu bestimmen. Aus der Differenz der beiden Messsignale wird die Konzentration an Stickstoffmonoxid erhalten. Ein Pendelbetrieb, wie im Rahmen des ersten Ausführungsbeispiels beschrieben, kann hier entfallen.

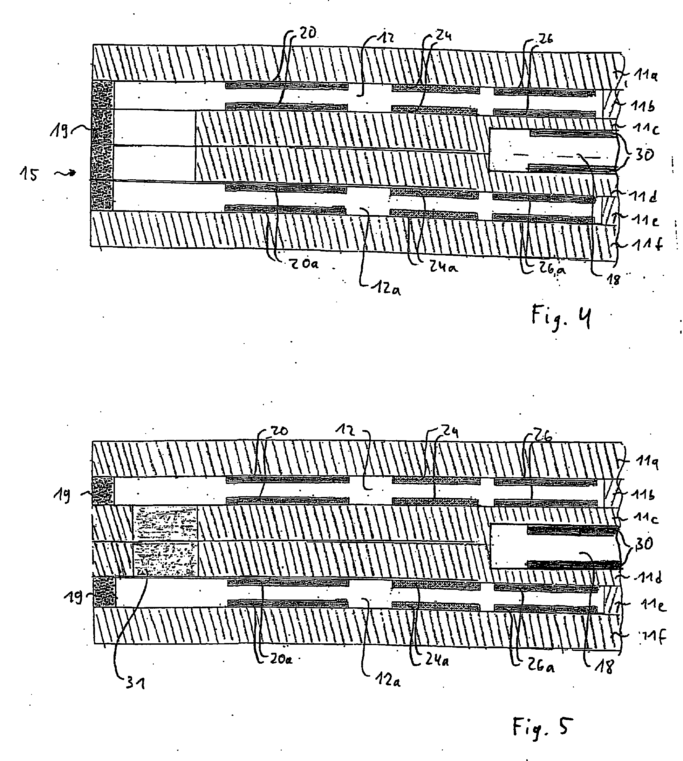

Ein weiteres Ausführungsbeispiel der vorliegenden Erfindung ist in Figur 4 abgebildet. Dabei bezeichnen weiterhin gleiche Bezugszeichen gleiche Baukomponenten. Das Sensorelement gemäß dem dritten Ausführungsbeispiel weist wie das Sensorelement gemäß dem zweiten Ausführungsbeispiel zwei Messgasräume 12, 12a auf. Im Unterschied zu dem in Figur 3 dargestellten Sensorelement sind die Messgasräume 12, 12a in verschiedenen Schichtebenen 11b, 11e untereinander angeordnet. Dazu weist das Sensorelement gemäß dem dritten Ausführungsbeispiel beispielsweise eine weitere Festelektrolytschicht 11f auf. Die Anordnung der Messgasräume 12, 12a erfolgt vorzugsweise symmetrisch zum Referenzgaskanal 18. Die Betriebsweise der Elektroden 20, 20a, 24, 24a, 26, 26a entspricht derjenigen, wie sie bereits im Rahmen des zweiten Ausführungsbeispiels beschrieben wurde. Beiden Messgasräumen 12, 12a ist eine gemeinsame Diffusionsbarriere 19 vorgeschaltet. Auf diese Weise unterliegt das in die Messgasräume 12, 12a eindiffundierende Gasgemisch demselben Diffusionswiderstand.

In Figur 5 ist ein viertes Ausführungsbeispiel der vorliegenden Erfindung abgebildet. Dabei bezeichnen weiterhin gleiche Bezugszeichen gleiche Baukomponenten. Das in Figur 5 abgebildete Sensorelement stellt eine Abwandlung des in Figur 4 dargestellten Sensorelements dar. Es weist zusätzlich mindestens eine Bohrung in den Festelektrolytschichten 11c, 11d auf, die mit einer porösen Diffusionsbarriere 31 ausgefüllt ist und die Messgasräume 12, 12a miteinander verbindet. Der Querschnitt der Diffusionsbarriere 31 ist vorzugsweise größer als die lichte Weite der Messgasräume 12, 12a. Auf diese Weise wird besonders wirkungsvoll gewährleistet, dass das zu messende Gasgemisch vor Erreichen der Messgasräume 12, 12a den selben Diffusionswiderstand erfährt.

Eine weitere Ausführungsform des in Figur 5 abgebildeten Sensorelements besteht darin, dass die Hilfselektroden 20 im Messgasraum 12 aus einem anderen Material ausgeführt werden als die weiteren ersten Hilfselektroden 20a im zweiten Messgasraum 12a. Dabei bestehen die Hilfselektroden 20 aus einem Material, an dem Ammoniak nicht oxidiert wird, wenn ein für die Entfernung von Sauerstoff bzw. Stickoxiden vorgesehenes Potenzial von - 200 bis - 400 mV angelegt wird. Ein derartiges Material ist beispielsweise ein basisches Oxid wie K₂O, Li₂O oder ein Oxid der Seltenen Erden. Auch Edelmetalle, die mit basischen Oxiden imprägniert sind, sind geeignet.

Für die weiteren ersten Hilfselektroden 20a wird ein Material vorgesehen, das die Oxidation von Ammoniak katalysiert, wenn ein Potenzial von - 200 bis - 400 mV angelegt wird. Als Material wird beispielsweise Platin oder eine Platin-Goldlegierung gewählt. Der Vorteil dieser Ausführungsform besteht darin, dass an alle Hilfselektroden 20, 20a dasselbe Potenzial angelegt werden kann und somit die Hilfselektroden 20, 20a elektrisch miteinander verbunden werden können und nur eine Zuleitung benötigt wird.

Wird das Material der weiteren zweiten Hilfselektroden 24a so gewählt, dass bei dem vorgesehenen Potenzial von - 200 bis - 400 mV eine vollständige Oxidation von Ammoniak stattfindet, so können die Hilfselektroden 24, 24a elektrisch mit den ersten Hilfselektroden 20, 20a verbunden werden und benötigen nur eine Zuleitung. Als Material ist beispielsweise Platin oder eine Platin-Goldlegierung geeignet.

Vorzugsweise wird das Material der Hilfselektrode 24 im Messgasraum 12 so gewählt, dass eine Reduktion von Stickstoffmonoxid beim vorgesehenen Potenzial von - 200 bis - 400 mV möglichst unterdrückt wird. Dabei ist als Material beispielsweise Platin oder eine Platin-Goldlegierung vorgesehen.

Da an den Messelektroden 26, 26a sowohl im Messgasraum 12 als auch im Messgasraum 12a eine Reduktion von Stickoxiden durchgeführt wird, können die Messelektroden 26, 26a aus demselben Material, beispielsweise aus Platin, ausgeführt sein und mit demselben Potenzial beaufschlagt werden. Demzufolge können auch die Messelektroden 26, 26a miteinander elektrisch kontaktiert werden und nur eine Zuleitung aufweisen.

## Patentansprüche

1. Verfahren zum Betrieb eines Sensorelements eines Gassensors zur Bestimmung der Konzentration von Ammoniak und gegebenenfalls mindestens eines weiteren Bestandteils eines Gasgemischs, insbesondere in Abgasen von Verbrennungsmotoren, mit mindestens einer ersten Hilfselektrode (24, 24a), die in direktem Kontakt mit dem Gasgemisch steht und an der ein Potential angelegt wird, bei dem im Gasgemisch enthaltenes Ammoniak oxidiert wird, und einer der ersten Hilfselektrode (24, 24a) in Strömungsrichtung vorangestellten weiteren Hilfselektrode (20, 20a), an der ein Potenzial anliegt, bei dem Sauerstoff und Stickoxide reduziert werden, wobei der ersten Hilfselektrode (24, 24a) mindestens eine Messelektrode (26, 26a), die in direktem Kontakt mit dem Gasgemisch steht, in Strömungsrichtung des Gasgemischs nachgeordnet ist, **dadurch gekennzeichnet, dass** an der Messelektrode (26, 26a) ein Potential angelegt wird, bei dem das Oxidationsprodukt des Ammoniaks, insbesondere Stickstoffmonoxid, reduziert wird, wobei ein mittels der Messelektrode (26, 26a) generiertes Signal zur Bestimmung der Konzentration von Ammoniak herangezogen wird

2. Verfahren nach Anspruch 1, **dadurch gekennzeichnet, dass** zwei Messelektroden vorgesehen sind, denen jeweils eine erste und eine weitere Hilfselektrode (20, 20a, 24, 24a) in Strömungsrichtung des Gasgemischs vorangestellt ist, wobei an einer der weiteren Hilfselektroden (20) ein Potenzial anliegt, bei dem bereits im Gasgemisch enthaltene Stickoxide zersetzt werden.

3. Verfahren nach Anspruch 2, **dadurch gekennzeichnet, dass** die erste (24,24a) und die weitere Hilfselektrode (20, 20a) aus unterschiedlichen Materialien ausgeführt sind, und dass an die erste (24, 24a) und die weitere Hilfselektrode (20, 20a) dasselbe Potenzial angelegt wird.

4. Verfahren nach Anspruch 1 oder 2, **dadurch gekennzeichnet, dass** den Messelektroden (26, 26a) eine gemeinsame Diffusionsbarriere (19) in Diffusionsrichtung des Gasgemischs vorangestellt wird.

5. Verfahren nach einem der vorangehenden Ansprüche, **dadurch gekennzeichnet, dass** in einem ersten Zeitraum die Konzentration des im Gasgemisch vorhandenen Ammoniaks bestimmt wird und in einem zweiten Zeitraum die Summe der Konzentrationen an im Gasgemisch vorhandenem Ammoniak und an im Gasgemisch von vorneherein vorhandenen Stickoxiden.

6. Verfahren nach Anspruch 5, **dadurch gekennzeichnet, dass** im ersten Zeitraum die Bestimmung des Ammoniaks in einem Gasgemisch erfolgt, aus dem an der weitern Hilfselektrode (20,20a) von vorneherein vorhandene Stickoxide entfernt worden sind.

7. Verfahren nach Anspruch 5, **dadurch gekennzeichnet, dass** Ammoniak zu Stickstoffmonoxid oxidiert wird.

8. Verfahren zum Betrieb eines Abgasreinigungssystems für Verbrennungsmotoren, **dadurch gekennzeichnet, dass** ein Verfahren nach einem der Ansprüche 1 bis 8 zur Ausführung kommt.

## Claims

1. Method for operating a sensor element of a gas sensor for determining the concentration of ammonia and optionally at least one further constituent of a gas mixture, in particular in exhaust gases of internal combustion engines, with at least one first supplementary electrode (24, 24a), which is in direct contact with the gas mixture and to which a potential is applied such that ammonia contained in the gas mixture is oxidized, and a further supplementary electrode (20, 20a), which is arranged ahead of the first supplementary electrode (24, 24a) in the direction of flow and to which a potential is applied such that oxygen and nitrogen oxides are reduced, the first supplementary electrode (24, 24a) being followed in the direction of flow of the gas mixture by at least one measuring electrode (26, 26a), which is in direct contact with the gas mixture, **characterized in that** a potential is applied to the measuring electrode (26, 26a) such that the oxidation product of the ammonia, in particular nitrogen monoxide, is reduced, a signal that is generated by means of the measuring electrode (26, 26a) being used for determining the concentration of ammonia.

2. Method according to Claim 1, **characterized in that** two measuring electrodes are provided, each of which is preceded in the direction of flow of the gas mixture by a first and a further supplementary electrode (20, 20a, 24, 24a), a potential being applied to one of the further supplementary electrodes (20) such that nitrogen oxides already contained in the gas mixture are decomposed.

3. Method according to Claim 2, **characterized in that** the first supplementary electrode (24, 24a) and the further supplementary electrode (20, 20a) are made of different materials, and **in that** the same potential is applied to the first supplementary electrode (24, 24a) and the further supplementary electrode (20, 20a).

4. Method according to Claim 1 or 2, **characterized in that** the measuring electrodes (26, 26a) are preceded in the direction of diffusion of the gas mixture by a common diffusion barrier (19).

5. Method according to one of the preceding claims, **characterized in that**, in a first time period, the concentration of the ammonia present in the gas mixture is determined and, in a second time period, the sum of the concentrations of ammonia present in the gas mixture and nitrogen oxides present in the gas mixture from the outset is determined.

6. Method according to Claim 5, **characterized in that**, in the first time period, the determination of the ammonia in a gas mixture from which nitrogen oxides present from the outset have been removed at the further supplementary electrode (20, 20a) takes place.

7. Method according to Claim 5, **characterized in that** ammonia is oxidised into nitrogen monoxide.

8. Method for operating an exhaust emission control system for internal combustion engines, **characterized in that** a method according to one of Claims 1 to 8 is performed.

## Revendications

1. Procédé d'utilisation d'un élément de détection d'un détecteur de gaz pour déterminer la concentration en ammoniac et éventuellement d'au moins un autre composant d'un mélange de gaz, en particulier des gaz d'échappement de moteurs à combustion interne, et qui présente:
au moins une première électrode auxiliaire (24, 24a) en contact direct avec le mélange de gaz et sur laquelle est appliqué un potentiel auquel l'ammoniac que contient le mélange de gaz est oxydé,
une autre électrode auxiliaire (20, 20a) placée en amont de la première électrode auxiliaire (24, 24a) dans la direction d'écoulement et à laquelle est appliqué un potentiel auquel l'oxygène et les oxydes d'azote sont réduits et
au moins une électrode de mesure (26, 26a) en contact direct avec le mélange de gaz disposée en aval de la première électrode auxiliaire (24, 24a) dans la direction d'écoulement du mélange de gaz,
**caractérisé en ce que**
un potentiel auquel le produit d'oxydation de l'ammoniac, en particulier le monoxyde d'azote, est réduit est appliqué sur l'électrode de mesure (26, 26a) et
**en ce qu'**un signal produit au moyen de l'électrode de mesure (26, 26a) est utilisé pour déterminer la concentration en ammoniac.

2. Procédé selon la revendication 1, **caractérisé en ce que** deux électrodes de mesure sont placées en aval d'une première électrode auxiliaire et d'une autre électrode auxiliaire (20, 20a, 24, 24a) dans la direction d'écoulement du mélange de gaz et **en ce qu'**un potentiel auquel les oxydes d'azote que contient le mélange de gaz sont déjà décomposés est appliqué sur une des autres électrodes auxiliaires (20).

3. Procédé selon la revendication 2, **caractérisé en ce que** la première électrode auxiliaire (24, 24a) et l'autre électrode auxiliaire (20, 20a) sont réalisées en deux matériaux différents et **en ce que** le même potentiel est appliqué sur la première électrode auxiliaire (24, 24a) et sur l'autre électrode auxiliaire (20, 20a).

4. Procédé selon les revendications 1 ou 2, **caractérisé en ce qu'**une barrière commune à la diffusion (19) est placée en amont des électrodes de mesure (26, 26a) dans la direction de diffusion du mélange de gaz.

5. Procédé selon l'une des revendications précédentes, **caractérisé en ce que** la concentration de l'ammoniac présent dans le mélange de gaz est déterminée pendant un intervalle de temps et **en ce que** la somme des concentrations de l'ammoniac présent dans le mélange de gaz et des oxydes d'azote présents antérieurement dans le mélange de gaz est déterminée pendant un deuxième intervalle de temps.

6. Procédé selon la revendication 5, **caractérisé en ce que** la détermination de l'ammoniac présent dans un mélange de gaz duquel les oxydes d'azote antérieurement présents ont été éliminés sur l'autre électrode auxiliaire (20, 20a) a lieu pendant le premier intervalle de temps.

7. Procédé selon la revendication 5, **caractérisé en ce que** l'ammoniac est oxydé en monoxyde d'azote.

8. Procédé d'utilisation d'un système d'épuration des gaz d'échappement de moteurs à combustion interne, **caractérisé en ce que** l'on exécute un procédé selon l'une des revendications 1 à 7.
